# EUROPEAN PATENT APPLICATION

(11) **EP 2 335 813 A1**
(43) Date of publication of application: **22.06.2011**
(21) Application number: 09177657.5
(22) Date of filing: 01.12.2009
(51) Int. Cl.: B01D 53/96, F01K 17/02

(54) **Method and apparatus for the removal of a sorbate component from a process stream with subsequent regeneration of the sorbent using solar energy**

(71) Applicant: Shell Internationale Research Maatschappij B.V., 2596 HR The Hague (NL)
(72) Inventor: The designation of the inventor has not yet been filed

(57) **Abstract**

A rich stream (212) comprising one or more sorbate components is treated with a sorbent to capture one or more of the one or more sorbate components and to provide a lean stream (214) that is diminished in sorbate component content and a loaded sorbent (200, 206, 228) comprising the sorbent and one or more sorbate components. Solar energy from the sun is collected in a concentrated solar power system (10) to provide a pressurized steam stream (42) with the captured solar thermal energy. The pressurized steam stream (42) is converted into electric power (45) and an exhaust steam stream (43). Heat from the exhaust steam stream (43) is used to regenerate the loaded sorbent (200, 206, 228).

## Description

The present invention provides a method of, and apparatus for, removing a sorbate component from a rich stream comprising one or more sorbate components.

The term "rich stream", for the purpose of the present disclosure, is used to refer to the stream from the sorbate component is to be removed. The term "lean stream" is used to refer to the stream from which the sorbate component has been removed.

Examples of rich streams include waste streams such as flue gas, and process streams such as natural gas, which both could contain acid components such as CO₂ as the sorbate component.

Natural gas is a useful fuel source, as well as being a source of various hydrocarbon compounds. It is often desirable to liquefy natural gas in a liquefied natural gas (LNG) plant at or near the source of a natural gas stream for a number of reasons. As an example, natural gas can be stored and transported over long distances more readily as a liquid than in gaseous form because it occupies a small volume and does not need to be stored at high pressure.

Usually, natural gas, comprising predominantly methane, enters an LNG plant at elevated pressures and is pre-treated to produce a purified feed stream suitable for liquefaction at cryogenic temperatures. The purified gas is processed through a plurality of cooling stages using heat exchangers to progressively reduce its temperature until liquefaction is achieved. The liquid natural gas is then further cooled and expanded to final atmospheric pressure suitable for storage and transportation.

In addition to methane, natural gas usually includes some heavier hydrocarbons and impurities, including but not limited to carbon dioxide, sulphur, hydrogen sulphide and other sulphur compounds, nitrogen, helium, water and other non-hydrocarbon acid gases, ethane, propane, butanes, C₅+ hydrocarbons and aromatic hydrocarbons. These and any other common or known heavier hydrocarbons and impurities either prevent or hinder the usual known methods of liquefying the methane, especially the most efficient methods of liquefying methane. Most if not all known or proposed methods of liquefying hydrocarbons, especially liquefying natural gas, are based on reducing as far as possible the levels of at least most of the heavier hydrocarbons and impurities prior to the liquefying process.

Hydrocarbons heavier than methane and usually ethane are typically condensed and recovered as natural gas liquids (NGLs) from a natural gas stream. The NGLs are usually fractionated to yield valuable hydrocarbon products, either as product streams *per se* or for use in liquefaction, for example as a component of a refrigerant.

Meanwhile, methane recovered from the NGL recovery is usually recompressed for use or reuse either in the liquefaction, such as a fuel gas, or being recombined with the main methane stream being liquefied, or it can be provided as a separate stream.

Acid gasses such as carbon dioxide and sulphur compounds, hydrogen sulphide and other sulphur compounds, such as the oxides of sulphur, are normally removed from the natural gas by an initial acid gas treatment step, in which the natural gas stream is exposed to a solvent, which reacts with the acid gasses to dissolve them and extract them from the stream. The solvent extraction reaction is reversible, allowing the solvent to be regenerated by heating.

The utility of the extraction of acid gasses is not limited to the treatment of a natural gas stream. Similar processes can be used to remove acid gasses contained in a flue gas stream, such as the flue gas from the combustion of hydrocarbon fuels in gas turbines and boilers commonly used in LNG and power plants. The current cost of flue gas CO₂ capture only, excluding transportation and storage is estimated around $ 60/tonne CO₂. This makes flue gas capture uneconomic and prohibitive for most current and planned plants.

However, acid gas treatment is increasing in importance as the impact on climate change of the rising concentration of greenhouse gasses, such as carbon dioxide, in the atmosphere is understood. Solvent extraction provides one way of capturing carbon dioxide from a gaseous stream to prevent its release into the atmosphere.

For instance, US Patent No. 6,782,714 discloses an LNG plant including a carbon dioxide recovery apparatus for natural gas. The sorbent, which can be an amine solution, is used to absorb and remove carbon dioxide and hydrogen sulphide. The amine solution containing the absorbed carbon dioxide is heated in a regeneration tower to release the carbon dioxide and regenerate the sorbent solution. The heat for the regeneration process is supplied by low pressure steam from a back pressure steam turbine. The low pressure steam is generated in a boiler by burning fuel, such as natural gas.

A disadvantage of the solvent extraction process is the energy required to regeneration the sorbent, and release the acid gas, such as carbon dioxide. For instance, the solvent extraction of carbon dioxide using an aqueous amine solution as the solvent, requires 1.0 to 2.0 MJ per kg of CO₂ to regenerate the solvent.

In order to regenerate the loaded sorbent, boilers are conventionally used to provide the heat required, normally in the form of steam. The boilers operate by combusting a hydrocarbon fuel and normally generate steam from the heat of the reaction. The burning of the hydrocarbon fuel required by the boilers generates additional carbon dioxide, which should also be removed from the flue gas stream of the boiler. This in turn requires the acid gas treatment of the boiler flue gas stream, utilising additional solvent, which must also be regenerated by heating, using yet more hydrocarbon fuel and generating additional carbon dioxide, increasing the financial costs of the acid gas treatment to isolate and capture the carbon dioxide.

In a first aspect, the present invention provides a method for the removal of a sorbate component from a rich stream comprising one or more sorbate components, said method comprising at least the steps of:
(a) providing a rich stream comprising one or more sorbate components;
(b) treating the rich stream with a sorbent to capture one or more of the one or more sorbate components and to provide a lean stream that is diminished in sorbate component content and a loaded sorbent comprising the sorbent and one or more sorbate components;
(c) collecting solar energy from the sun in a concentrated solar power system to provide a pressurized steam stream with the captured solar thermal energy;
(d) converting the pressurized steam stream into electric power and an exhaust steam stream, the exhaust steam stream being at lower pressure than the pressurized steam stream; and
(e) regenerating the loaded sorbent to provide a sorbent component and one or more sorbate component streams wherein using heat from the exhaust steam stream to heat the loaded sorbent to provide the sorbent component and one or more sorbate component streams.

In a further aspect, the present invention provides an apparatus for removing a sorbate component from a rich stream comprising one or more sorbate components, said apparatus comprising at least:
- a process stream inlet line connected to a source of a rich stream comprising one or more sorbate components;
- a treating unit connected to the rich stream inlet line arranged to treat the process stream with a sorbent and to provide a lean stream and a loaded sorbent;
- a concentrated solar power system to capture solar thermal energy to provide a pressurized steam stream with the captured solar thermal energy;
- a power generator connected to the concentrated solar power system to receive the pressurized steam stream and to convert the pressurized steam stream into electric power and an exhaust steam stream; and
- a loaded sorbent regeneration apparatus connected to the power generator to receive the exhaust steam stream from the power generator, and to generate a sorbent component and an sorbate component stream from the loaded sorbent using heat from the exhaust steam stream.

As used herein, the term "sorbent" means any solid or liquid substance which can reversibly absorb, adsorb and/or capture one or more substances, the latter called "sorbates". The term "sorbate" as used herein refers to the solid, liquid or gaseous substance (to be) absorbed, adsorbed and/or captured by the sorbent. Thus, a sorbate component as used hereinafter may be in the form of an absorbate component or an adsorbate component. Any difference between absorbate or adsorbate is for the purpose of the present invention not of essence, as long as loaded sorbent is or can be regenerated using heat. Often, the sorbate components to be removed from the process stream are considered to be contaminants in the process stream.

The term "loaded sorbent" is used herein to describe the sorbate-containing sorbent, and is synonymous with the terms "rich sorbent" and "fat sorbent". The term "loaded sorbent" encompasses both partially- and fully-loaded sorbents.

Embodiments and examples of the present invention will now be described by way of example only with reference to the accompanying drawings.
Figure 1 is a diagrammatic scheme for a first apparatus and method comprising regenerating a loaded sorbent using Concentrated Solar Power (CSP).
Figure 2 is a diagrammatic scheme for a second apparatus and method comprising regenerating a loaded sorbent using CSP.
Figure 3 is a diagrammatic scheme for a third apparatus and method comprising regenerating a loaded sorbent using CSP.

For the purpose of this description, a single reference number will be assigned to a line as well as a stream carried in that line.

A concentrated solar power (CSP) system collects light from the sun and captures this solar thermal energy by producing a pressurized steam stream, optionally via heating of a thermal transfer fluid. It is presently proposed to employ CSP in a hybrid method and apparatus to provide both power as well as heat for regeneration of a loaded sorbent. Herewith is provided an elegant way to produce steam with conditions that match the desired conditions tailored for regenerating of the loaded solvent.

The generated power may be used to supplement electrical or mechanical power generated by gas turbines. Since the power output of a gas turbine generally decreases with higher ambient temperature, and high ambient temperature often coincides with conditions of sunshine, the present invention therefore helps to compensate for ambient-temperature caused decrease in gas turbine power generation.

The method may comprise at least the steps of:
- providing a loaded sorbent comprising a sorbent and one or more sorbate components;
- providing a concentrated solar power system;
- collecting solar energy from the sun in the concentrated solar power system to provide captured solar thermal energy; and
- using at least a part of the captured solar thermal energy to generate electric power, and part of the captured solar thermal energy to heat the loaded sorbent to provide a sorbent component and one or more sorbate component streams.

A suitable apparatus may comprise:
- a concentrated solar power system to capture solar thermal energy;
- a power generator to generate electric power from at least part of the captured solar thermal energy; and
- a sorbent heat exchanger to generate a sorbent component and a sorbate component stream using at least part of the captured solar thermal energy.

The sorbent regenerated using CSP may be a solid entrapping a liquid or gas, such as a zeolite or metal oxide framework (MOF) entrapping water, or a liquid carrying a dissolved gas, such as a solvent comprising dissolved carbon dioxide produced by acid gas removal in the production of Liquefied Natural Gas (LNG).

By using CSP to help to regenerate the loaded sorbent, the quantities of hydrocarbon fuel which must be burned, e.g. in a separate, conventional, boiler to provide steam to heat the loaded sorbent, can be reduced. In some cases the boilers can be dispensed with entirely. By supplementing the heat of combustion (e.g. in a boiler) with captured solar thermal energy, hydrocarbon fuel costs can be reduced, and the carbon dioxide emissions associated with the manufacturing plant lowered.

The methods and apparatuses can be used to regenerate solid sorbents such as zeolites and metal oxide frameworks, and liquid sorbents such as those used in the solvent extraction of acid gases including, but not limited to carbon dioxide, oxides of sulphur and hydrogen sulphide. The sorbents can be used in the removal of acid gases from a hydrocarbon stream, such as a natural gas stream for a LNG plant, or a flue gas stream. Also sorbents used in a molecular sieve unit may be regenerated with the methods and apparatuses disclosed herein.

The method and apparatus of the present invention may advantageously addresses the problem of the significant energy requirements of acid gas loaded solvent regeneration by utilising Concentrated Solar Power (CSP) to provide the thermal energy required to separate the acid gas sorbate from the solvent sorbent. CSP thermal energy production does not result in the generation of carbon dioxide. The present invention is therefore assists in the provision of a zero CO₂ emission plant.

A concentrated solar power system typically comprises one or more concentrators for concentrating solar radiation, and one or more receivers on which the solar radiation may be concentrated and to capture solar thermal energy. The solar energy may for instance be reflected onto the one or more receivers, with the one or more concentrators, to heat one or more thermal transfer fluid streams in the one or more receivers to provide one or more heated first thermal transfer fluid streams.

The thermal transfer fluid is preferably selected from the group consisting of: H₂O, liquid sodium, molten salt, natural or synthetic oil and air.

If the first thermal transfer fluid essentially consists of water, the heated first thermal transfer fluid may then be directly delivered in the form of pressurized steam stream. Such a pressurized steam stream may have a pressure of about 100 bar and a temperature of about 500 °C.

If the thermal transfer fluid is not essentially water, but for instance oil, then it is used as an intermediate thermal transfer fluid. An intermediate steam generating step is then required, wherein heat from the intermediate thermal transfer fluid is consumed to produce the first heated thermal transfer fluid in the form of the pressurized steam stream. The produced pressurized steam may then have a pressure of 100 bar and a temperature of about 375 °C.

Either way, ultimately the CSP system delivers the first thermal transfer fluid in the form of a pressurized steam stream.

The pressurized steam stream is fed to a power generator, suitably comprising a back pressure steam turbine, where the pressurized steam stream is expanded to form an exhaust stream at back pressure which is lower than the pressure of the pressurized steam stream.

At least one of the heated first thermal transfer fluid streams may be heat exchanged against one or more second thermal transfer fluid streams, e.g. in an additionally provided first heat exchanger, to provide at least one first thermal transfer fluid stream and one or more heated second thermal transfer fluid streams. If the second heated thermal transfer fluid is in the form of the pressurized steam, this pressurized stream may then be passed to the power generator and the exhaust stream from the power generator to the loaded sorbent regeneration apparatus.

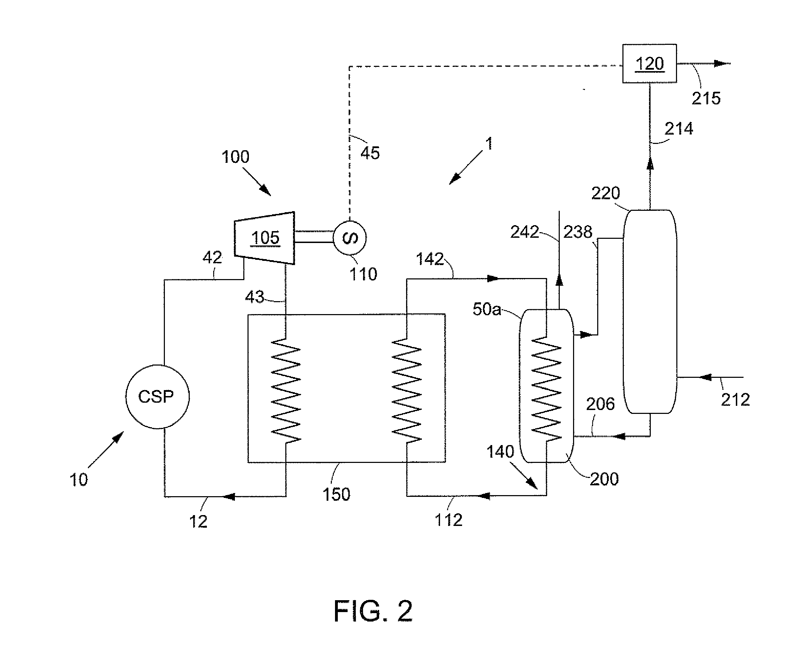

Alternatively, first heat exchanger forms part of the loaded sorbent regeneration apparatus. In such a case, the first thermal transfer fluid itself may be in the form of the pressurized steam stream, whereby the exhaust stream from the power generator is passed to the first heat exchanger to heat the second thermal transfer stream. The heated second thermal transfer fluid stream may then be further heat exchanged, e.g. in the sorbent heat exchanger, against the loaded sorbent to provide the second thermal transfer fluid stream the sorbent and the sorbate stream. Subsequently, the second thermal transfer fluid stream may be passed back to to the first heat exchanger for re-heating. Such an embodiment will be further detailed below with reference to Figure 2.

Heat carried in the exhaust stream from the back pressure steam turbine is used to regenerate the loaded sorbent, e.g. by exchanging heat with the loaded sorbent in the sorbent heat exchanger to heat the loaded sorbent or by exchanging heat with a second thermal transfer fluid stream which in turn passes the heat to the loaded sorbent.

After the heat exchanging, the resulting partially saturated steam stream, comprising or consisting of hot water, may be circulated back to the CSP system to be reheated. Before feeding back to the CSP system, residual heat still present in the partially saturated steam stream, may be used for other process purposes, such as but not exclusively: heating a thermally driven chiller e.g. in the form of an absorption chiller, an adsorption chiller, or providing heat to a reboiler in a distillation process, or heating a defrost gas heater, or providing heat to an inlet three-phase separator heater.

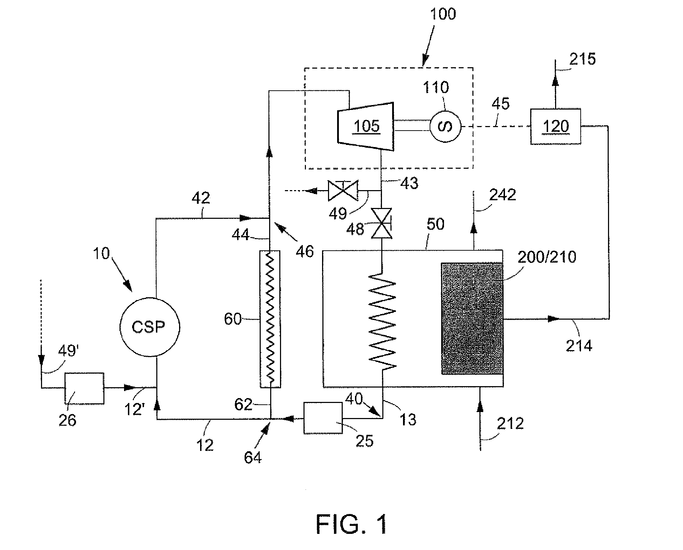

Figure 1 shows a first embodiment of the invention. A CSP system 10 is shown which comprises one or more first thermal transfer fluid streams 12 in a first thermal transfer fluid circuit 40, which captures solar thermal energy to heat the one or more first thermal transfer fluid streams 12 to provide one or more heated first thermal transfer fluid streams 42. For the purpose of the example, the one or more heated first thermal transfer fluid streams are assumed to form the pressurized steam stream. Consequently, the terms "steam" and "first thermal transfer fluid" may be used interchangeably in the following description.

For simplicity, only a single heated steam stream 42 is shown in the form of a pressurized steam stream. This stream will be referred to in the singular for the discussion of Figure 1, but the method and apparatus disclosed herein encompasses the use and/or presence of a plurality of pressurized steam streams.

Two return streams 12, 12' to the CSP system, each containing water, are shown and described with reference to Figure 1. However, this could be a single stream or a number higher than two. When referring to a water stream in this context, it is understood that this is intended to include pure liquid (condensed) water as well partially saturated steam.

The CSP system 10 concentrates and collects direct solar energy to provide medium to high temperature heat. A CSP system may contain three main elements: one or more concentrators, one or more receivers and one or more thermal transfer fluid circuits. In Figure 1, the one or more concentrators and one or more receivers are represented by the unit CSP. The one or more concentrators reflect and concentrate light from the sun onto the one or more receivers. The one or more receivers receive the reflected and concentrated sunlight and heat the thermal transfer fluid.

The captured solar energy is employed to produce a pressurized steam stream 42, which is passed to a power generator 100. As explained in general terms above, water 40 can be heated in the receiver tubes to about 500 °C, to produce pressurized steam that can be passed to the power generator 100 directly. Using an intermediate heat transfer fluid stream, e.g. consisting of oil, steam can be generated at a pressure of 100 bar and a temperature of about 375 °C, suitable for use as the pressurized steam stream 42.

The power generator 100 comprises a steam turbine, suitably in the form of a back pressure steam turbine 105, which in the present example is driven by the pressurized steam stream 42, and an electric generator 110 which is mechanically coupled to the back pressure steam turbine 105 and driven by it. The power generator 100 converts the pressurized steam stream 42 into electric power 45 and an exhaust steam stream 43 which is typically at a lower pressure than the pressurized steam stream 42. The electric power may be exported and/or sold, or used internally for the further treatment of the lean stream 214. An example will be provided below.

The exhaust stream 43 from the power generator 100, for instance in the form of low pressure steam, may be passed to sorbent heat exchanger 50 where it heats a loaded sorbent 200 to regenerate the sorbent component 210. Other path(s) 49, that bypass the sorbent heat exchanger 50, may also be provided to allow the power generator to be activated even when no flow through the sorbent heat exchanger 50 is desired. Clearly, the other path(s) 49 may also be eventually looped back to CSP system 10. As an example, in Figure 1 line 49 is connected to line 49' (the connection itself not being explicitly shown) and to be returned to the CSP system in the form of water stream 12'. The water stream 12' may be formed from the pressurized steam in one or more of the other paths(s) 49 by transferring some of its heat to one or more auxiliary process heaters and/or auxiliary processes. An auxiliary process heater is schematically depicted at 26.

When it is required to regenerate the loaded sorbent 200, part of or all of the exhaust steam stream 43 is allowed to flow through the sorbent heat exchanger 50, for instance by opening first valve 48. The exhaust steam stream 43 heats the loaded sorbent 200 to a temperature sufficient to release the captured sorbate. The released sorbate exits the sorbent heat exchanger 50 as sorbate component stream 242. Once the sorbate has been removed to regenerate the sorbent 210, first valve 48 can be closed and the operation of the sorbent component 210 to capture the one or more sorbate components resumed. A partially saturated steam stream 13, possibly in the form of hot liquid water, is discharged from the sorbent heat exchanger 50, which in turn is looped back to the water stream 12.

In the example of Figure 1, a sorbent heat exchanger 50 for a solid sorbent component 210 is shown. The solid sorbent component 210 is preferably selected from the group comprising zeolites and metal oxide frameworks. The sorbate component may be a liquid such as water or an organic solvent.

Operation of the sorbent 210 to capture the one or more sorbate components may be carried out in the sorbent heat exchanger 50, or in another process vessel. Operation of the sorbent 210 in the sorbent heat exchanger 50 is preferred, as this does not require the removal of the loaded sorbent from a separate sorbate extraction vessel and transfer of the loaded sorbent to the sorbent heat exchanger 50 for regeneration.

In operation, a rich stream 212 comprising one or more sorbate components is provided to the sorbent heat exchanger 50 via a rich stream inlet line. In the present example, the rich stream is provided in the form of a process stream (in the form of a hydrocarbon stream) in a process stream inlet line. Thus, in the present example, the process steam inlet line is connected to a source of a hydrocarbon stream comprising one or more sorbate components.

The sorbent heat exchanger 50 is operating as an sorbate extraction vessel. The process stream flows through the solid sorbent 210, such as a packed bed of zeolite or MOF sorbent, and the one or more sorbate components are captured by the sorbent 210 to provide a lean stream 214, which in the context of the present example is considered to be a treated process stream 214. The treated process stream 214 is diminished in sorbate component content compared to the rich process stream 212, and it is intended to be further treated.

The lean process stream 214 may be passed to a liquefaction unit 120, wherein it is cooled down and liquefied, for instance to form liquefied natural gas 215. Optionally, it may first be passed through a natural gas liquids extraction unit, optionally coupled to a C2-C4 fractionation train, to recover C2, C3, and/or C4 components from the natural gas (not shown). A variety of liquefaction units and processes are known in the art, and the present invention is not limited to a specific liquefaction unit or process. However, they have in common that the liquefaction of the lean process stream 214 requires significant amounts of energy. In a preferred embodiment the liquefaction unit 120 electrically connected to the power generator 100, so that the electric power generated in step (d) can be used to provide at least part of the energy necessary for the subsequent liquefying of the lean stream 214.

The liquefaction unit 120 may suitably be all electric, driven exclusively by electric motors such as exemplified in US Pat. 6,658,891, or electric motors may be present in the form of starter/helper motors to supplement power provided by other drive means such as gas turbines. In either case, the base load power may be provided from a separate source while the power generated in accordance with the present disclosure is intended to supplement the base load power, for instance during high ambient temperature conditions.

An optional thermal storage system 60 may be provided in the steam circuit 40 to store captured thermal energy at those times when the heated steam 42 is not required to regenerate the loaded sorbent 200 and/or provide additional electric power 45 to the liquefaction unit 120. During the daytime when the CSP system 10 can capture solar thermal energy to produce heated first thermal transfer fluid stream 42, a portion of the heated steam stream 42 may be passed to thermal storage system 60 via first junction 46, which can be a first shunt valve, along heated steam storage stream 44. Thermal storage unit 60 functions as a heat exchanger to remove and store heat from the heated steam storage stream 44 to provide a steam storage stream 62, which is returned to depressurized steam stream 12 via second junction 64, which can be a second shunt valve.

When the stored heat in the thermal storage system 60 is required by the CSP system 10, for instance at night when the CSP system 10 cannot capture solar thermal energy to produce a flow of heated first thermal transfer fluid stream 42, or during cloudy daylight periods when the intensity of the sunlight is reduced, second junction 64 can direct a part of first thermal transfer fluid stream 12 to the thermal storage system 60 along first thermal transfer fluid storage stream 62. First thermal transfer fluid storage stream 62 is heated in the thermal storage system 60 to provide heated first thermal transfer fluid storage stream 44, which can returned to heated first thermal transfer fluid stream 42 via first junction 46. The heated first thermal transfer fluid stream 42 can then be passed to the power generator 100. This way, the thermal storage system 60 can release captured solar thermal energy to regenerate a loaded sorbent 200 even when there is insufficient sunlight available to CSP system 10.

For practical reasons, the thermal storage system 60 may be a molten-salt storage system. Inside the thermal storage system 60 the thermal energy from the heated first thermal transfer fluid storage stream 44 can be passed to a cold salt stream from a cold salt storage tank to generate a hot salt stream. The hot salt stream is passed to a hot salt storage tank where it can be stored until the thermal energy of the hot salt is required. For example, a sixteen hour molten-salt storage system can allow CSP systems to be run on a 24 hour basis in Summertime when there is sufficient daytime sunlight to provide a store of captured thermal energy.

Figure 2 illustrates a second embodiment of the invention. The embodiment of Figure 2 shows a liquid sorbent system. In this embodiment, a second thermal transfer fluid circuit 140 provides the heat to regenerate the loaded sorbent 200. The second thermal transfer fluid circuit 140 is a different circuit from the first thermal transfer fluid circuit 40 that contains the pressurized steam stream 42.

In particular, the second thermal transfer circuit 140 comprises one or more second thermal transfer fluid streams 112 which are provided with the captured solar thermal energy by heat exchange with the one or more exhaust streams 43 in a first heat exchanger 150, the exhaust streams being received from the power generator 100. The second thermal transfer fluid stream 112 may be selected from the group comprising: H₂O, liquid sodium, molten salt, natural or synthetic oil and air. H₂O is a preferred second thermal transfer fluid.

As discussed in relation to Figure 1, the CSP system can additionally comprise one or more concentrators and one or more receivers, and may be of the parabolic trough, linear Fresnel reflector array, central receiver or parabolic dish types.

The heated exhaust stream 43, or part thereof, is passed to a first heat exchanger 150, where it is heat exchanged against the second thermal transfer fluid stream 112 to provide the first thermal transfer fluid stream 12 in the first thermal transfer fluid circuit 40 and a heated second thermal transfer fluid stream 142 in the second thermal transfer fluid circuit 140. The first heat exchanger 150 can be any heat exchanger known in the art, such as a plate and fin heat exchanger or a shell and tube heat exchanger. Shell and tube heat exchangers, and more particularly kettle heat exchangers are preferred. Although only a single first heat exchanger 150 is shown in Figure 2, the method and apparatus disclosed herein encompasses the possibility of a plurality of heat exchangers, in series and/or in parallel.

The heated second thermal transfer fluid stream 142, which may be a steam stream, is passed to the sorbent heat exchanger 50a where it is heat exchanged against loaded sorbent 200 to regenerate the loaded sorbent 200 to provide a (regenerated) sorbent stream 238, an sorbate component stream 242 and second thermal transfer fluid stream 112.

The loaded sorbent 200 is produced in solvent extraction reactor 220, such as an absorber tower. Process stream 212 comprising one or more sorbate components is passed via the process stream inlet line to the solvent extraction reactor 220 where it is intimately contacted with liquid sorbent, thereby allowing the liquid sorbent to extract the one or more sorbate components from the process stream 212. In one preferred aspect, the one or more sorbate components comprise carbon dioxide. A number of chemical solvents are useful as the sorbent such as primary, secondary and/or tertiary amines derived from alkanolamines, especially amines are derived from ethanolamine, especially monoethanolamine (MEA), diethanolamine (DEA), triethanolamine (TEA), diisopropanolamine (DIPA) and methyldiethanolamine (MDEA) or mixtures thereof; diglycolamines and sterically hindered amines.

For example, the carbon dioxide can be captured in the solvent extraction reactor 220 by an acid-base reaction to yield a soluble carbonate salt according to the reactions: 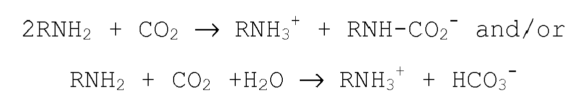 These solvent extraction reactions are reversible, allowing the aqueous amine solvent to be regenerated by heating in the sorbent heat exchanger 50a.

Preferred sterically hindered amines can be a metal sulphonate, metal phosphonate, metal phosphate, metal sulfamate, metal phosphoramidate or metal carboxylate of at least one hindered secondary or tertiary amine, wherein the metal sulphonate, phosphonate, phosphate, sulfamate or phosphoramidate is attached to the amine nitrogen through a group containing at least one chain carbon, and the metal carboxylate is attached to the amine nitrogen through an alkylene group containing two or more chain carbons. Such sterically hindered amines are disclosed WO 2007/021531.

The sorbents discussed can be present as a liquid sorbent mixture in which the sorbent is dissolved in a solvent or mixed with a liquid, the solvent selected from water or a physical solvent or mixtures thereof.

Physical solvents which are suitable in the method described herein are cyclo-tetramethylenesulfone and its derivatives, aliphatic acid amides, N-methylpyrrolidone, N-alkylated pyrrolidones and the corresponding piperidones, methanol, ethanol and mixtures of dialkylethers of polyethylene glycols or mixtures thereof.

The sorbent may preferably comprise one or more amines selected from the group: monoethanolamine (MEA), diethanolamine (DEA), diglycolamine (DGA), methyldiethanolamine (MDEA), triethanolamine (TEA), N,N'-di(hydroxyalkyl)piperazine, N,N,N',N'-tetrakis(hydroxylalkyl)-1,6-hexanediamine and tertiary alkylamine sulfonic acid compound. This is particularly useful if the process stream 212 comprises CO₂.

MEA is an especially preferred amine, due to its ability to absorb a relatively high percentage of CO₂ (volume CO₂ per volume MEA). Thus, a sorbent comprising MEA is suitable to remove CO₂ from gases having low concentrations of CO₂, typically 3 to 10% (v/v) of CO₂. Preferably, the N,N'-di(hydroxyalkyl)piperazine is N,N'-d-(2-hydroxyethyl)piperazine and/or N,N'-di-(3-hydroxypropyl)piperazine. Preferably, the tetrakis-(hydroxyalkyl)-1,6-hexanediamine is N,N,N',N'-tetrakis(2-hydroxyethyl)-1,6-hexanediamine and/or N,N,N',N'-tetrakis(2-hydroxypropyl)-1,6-hexanediamine. Preferably, the tertiary alkylamine sulfonic compounds are selected from the group of 4-(2-hydroxyethyl)-1-piperazineethanesulfonic acid, 4-(2-hydroxyethyl)-1-piperazine-propanesulfonic acid, 4-(2-hydroxyethyl)piperazine-1-(2-hydroxypropanesulfonic acid) and 1,4-piperazinedi-(sulfonic acid) .

An especially preferred sorbent comprises mixtures of a primary or secondary amine with a tertiary or a sterically hindered amine. Suitable tertiary or sterically hindered amines have been described hereinabove. The primary or secondary amine compound suitably has a pKb (at 25 °C in water) below 5.5, preferably below 5, more preferably below 4.5. A lower pKb results in improved process results in the form of increased CO₂ absorption. An especially preferred secondary amine is piperazine.

In the event that the process stream 212 comprises an appreciable quantity of oxygen, suitably in the range of from 1 to 20% (v/v) of oxygen, preferably a corrosion inhibitor is added to the absorbing liquid. Suitable corrosion inhibitors are described for example in US Patent No. 6,036,888. It will be understood that the conditions used for the removal of the sorbate depend inter alia on the type of sorbent used. In the event that the sorbent comprises an amine, the sorbate removal in solvent extraction reactor 220 is suitably carried out at a temperature between 15 and 90 °C, preferably at a temperature of at least 20 °C, more preferably between 25 and 80 °C, still more preferably between 40 and 65 °C, and even still more preferably at about 55 °C. In the event that the absorbing liquid comprises ammonia, suitably the sorbate removal is performed at temperatures below ambient temperature, preferably in the range of from 0 to 10 °C, more preferably from 2 to 8 °C.

Returning to Figure 2, the loaded sorbent 200 is removed from at or near the bottom of the solvent extraction reactor 220 and passed to sorbent heat exchanger 50a as loaded sorbent stream 206 where it is heated to release the sorbate component and regenerate the sorbent. The sorbent regeneration temperature is preferably between 100 and 200 °C, more preferably between 120 and 180 °C. The regenerated sorbent is returned to the solvent extraction reactor 220 as sorbent stream 238. In this way a continuous sorbate component extraction and sorbent regeneration proves is provided.

Treated process stream 214, which contains a diminished sorbate component content compared to process stream 212 is withdrawn from solvent extraction reactor 220. If process stream 212 is a natural gas stream, then treated process stream 214 can be passed to one or more further treatment units, for instance for the optional removal of natural gas liquids, and subsequent liquefaction in liquefaction unit 120 to provide LNG 215. Power generated in the power generator 100 may be used to provide energy to the liquefaction unit 120.

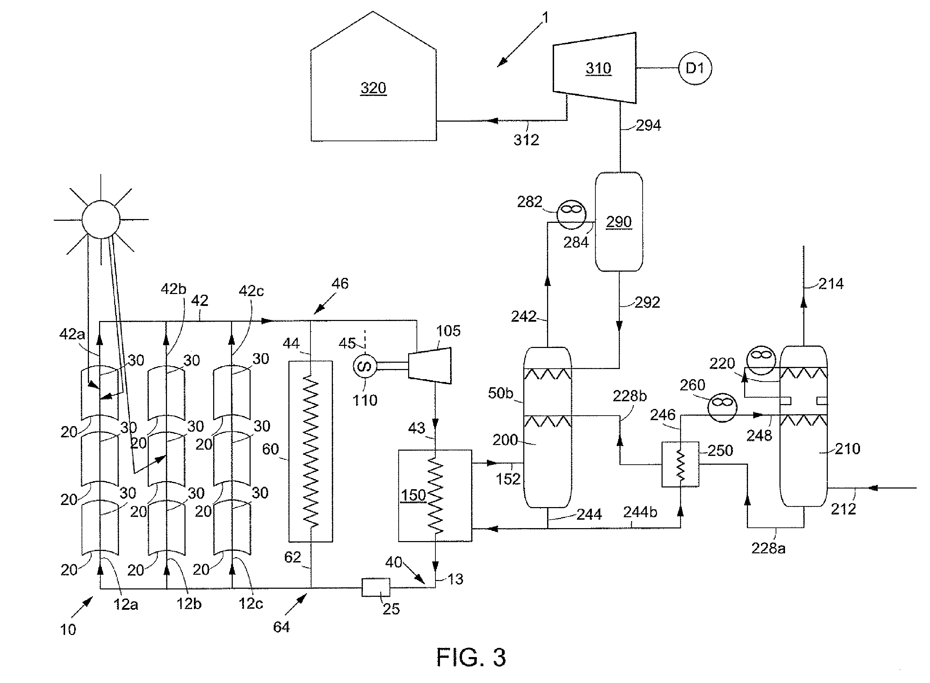

Figure 3 is a diagrammatic scheme for an apparatus and method of regenerating a loaded sorbent according to a third embodiment. A CSP system 10 comprising concentrators 20, receivers 30 and first thermal transfer circuit 40 is disclosed. First thermal transfer circuit 40 comprises a first thermal transfer fluid stream 12, which is split into three parallel first thermal transfer fluid part streams 12a, 12b, 12c. Each first thermal transfer fluid part stream 12a, 12b, 12c is passed through three pairs of concentrators 20 and receivers 30 which capture solar thermal energy to provide three heated first thermal transfer fluid part streams 42a, 42b, 42c in the form of pressurized steam streams respectively. The three heated first thermal transfer fluid part streams 42a, 42b, 42c are then combined to provide pressurized steam to the power generator 100.

The CSP system 10 shown in Figure 3 is a parabolic trough system comprising nine parabolic trough concentrators 20 each having an associated tubular receiver 30. Each parabolic trough concentrator 20 reflects and concentrates light from the sun onto a corresponding receiver 30. A first thermal transfer fluid part stream 12a, 12b, 12c is carried within each receiver and is heated by the solar thermal energy captured in each receiver 30.

A thermal storage system 60 is provided in first thermal transfer fluid circuit 40. This operates in an identical manner to the thermal storage system 60 shown in Figure 1.

The exhaust stream 43 from the power generator 100 is heat exchanged in first heat exchanger 150 against a second thermal transfer fluid stream 244, which in this embodiment is a sorbent stream, to provide a heated second thermal transfer fluid stream 152, which is a heated sorbent stream, and the first thermal transfer fluid stream 112. First heat exchanger 150 replaces the boiler-fired reboiler in conventional acid gas treatment systems.

The heated sorbent stream 152 is passed to a sorbent heat exchanger 50b, which can be a stripper column, where it is used to heat and thereby regenerate loaded sorbent stream 228b. This heating releases the captured one or more sorbate components as sorbate component stream 242. Sorbate component stream 242 is cooled by first cooler 282, which may be an air or water cooler, to provide cooled sorbate component stream 284. Cooled sorbate stream 284 may be a multi-phase stream comprising the one or more sorbate components, such as carbon dioxide, and any residual sorbent, such as an aqueous amine solution, which will have been condensed by first cooler 282. Cooled sorbate stream 284 is passed to a separation vessel 290, such as a gas/liquid separator known in the art. Separation vessel 290 provides a sorbent bottoms stream 292 which is passed back to the sorbent heat exchanger 50b, and a sorbate top stream 294 which is passed to a first compressor 310, powered by driver D1. First compressor 310 compresses the sorbate top stream 294 to provide a compressed sorbate stream 312, such as a compressed carbon dioxide stream, which is passed to storage tank 320 for storage. The storage tank 320 may be in the form of a conventional constructed vessel for the storage of a gaseous product but also includes storage in an oil reservoir, for instance an undersea reservoir. In this way, the method and apparatus described herein can be used in a carbon capture process, for instance by transporting the compressed carbon dioxide stream to an undersea oil reservoir. In addition, the compressed carbon dioxide may also be used in an enhanced oil recovery process, where it is injected into an oil reservoir to increase the amount of oil removed.

In a further embodiment (not shown), the compressed sorbate stream 312, which can be a compressed carbon dioxide stream, can be passed to a mineral carbonation zone. In this zone, an aqueous stream comprising dispersed silicate particles is passed to a mineral carbonation reactor where it is reacted with the compressed carbon dioxide stream to produce carbonate compounds. The carbonate compounds can then be used elsewhere or stored. This process is discussed in greater detail in WO 2004/037391.

Returning to the sorbent heat exchanger 50b, at least a part of (regenerated) sorbent stream 244, is passed to second heat exchanger 250 as sorbent part stream 244b, where it its heat exchanged against loaded sorbent bottoms stream 228a to pre-heat the loaded sorbent bottoms stream, providing loaded sorbent stream 228b and heat exchanged sorbent stream 246. Heat exchanged sorbent stream 246 is then cooled by second cooler 260, which can be an air or water cooler, to provide cooled sorbent stream 248. Cooled sorbent stream 248 is passed to solvent extraction reactor 220 where it is intimately contacted with the process stream 212 comprising one or more sorbate components. Loaded sorbent bottoms stream 228a can be removed from at or near the bottom of the solvent extraction reactor 220 and passed to the second heat exchanger 259

In particular, but not only when the method and apparatus disclosed herein are used in combination with a liquefaction unit 120, it will be apparatent that there may be other heat consumers, in addition to regeneration of the sorbent, available that could be serviced with residual heat remaining in the partially saturated steam 13 downstream of the sorbent regeneration, or with the heat carried in the other part(s) 49 of the exhaust steam 43 from the generator 100.

Examples of other heat consumers that could be serviced with the heat carried in the other parts(s) 49 of the exhaust stream 43 include relatively high quality process heaters such as reboilers that add heat to a distillation process, heaters that add heat to a catalytic conversion process, heaters of a thermal desalination process, and heaters driving a thermally driven chiller. An example of a suitable distillation process includes a hydrocarbon condensate stabilisation process in a stabilizer column. An example of a suitable catalytic conversion process includes a catalytic acid gas enrichment process in an acid gas enrichment unit, such as a Clauss off-gas treating unit. Examples of thermally driven chillers include absorbtion chillers, adsorbtion chillers, and absorption heat pumps.

Thus, in preferred embodiments a part of the exhaust steam stream that is not used to heat the loaded sorbent is used to provide heat to an auxiliary process. The auxiliary process may be selected from the group consisting of: a distillation process, a catalytic conversion process, a thermal desalination process, and a thermally-driven chilling process. In such embodiments, the power generator is coupled to at least one other process heater of an auxiliary process arranged parallel to the sorbent regeneration. In other words, the part of the exhaust steam stream that provides heat to the other process heater does not provide heat to the sorbent regeneration process.

With reference to Figure 1, the part of the exhaust steam stream that is not used to heat the loaded sorbent is in the other path(s) 49, that bypass the sorbent heat exchanger 50. Line 49 is connected to line 49' (the connection itself not being explicitly shown) and the auxiliary process is schematically represented by auxiliary process heater 26.

Examples of other heat consumers that be serviced with residual heat carried in the partially saturated steam downstream of the sorbent regeneration (and/or steam discharged by any of the other heat consumers of the auxiliary processes indicated above) include: steam jackets for lines carrying solidifying substances such as sulphur carrying lines, heaters of a distillation process in a C2-C4 fractionation train, and heaters in thermally driven chillers.

Thus, in preferred embodiments heat is drawn from the partially saturated steam coming from the regeneration of the loaded sorbent, to provide further process heat. In this preferred group of embodiments, the loaded sorbent regeneration apparatus may be coupled to at least one further process heater downstream of the loaded sorbent regeneration apparatus. Suitably, the further process heat is added to further process steps to which the rich stream 212 or the lean stream 214 or streams extracted therefrom are subjected.

Process heat for the purpose of which the residual heat may be used, may be added to the further process steps via one or more of various types of process heaters, such as for instance a heater (e.g. a reboiler) in a distillation process; a feed gas heater to heat the rich stream 212 gas in step (a); a defrost gas heater; a steam jacket heater, an inlet three-phase separator heater, which separates a hydrocarbon stream from a multi-phase well fluid stream. Such process heaters, which suitably consume low quality residual heat, are generally not present in a typical electrical power generation plant.

An example of providing heat to a heater in a distillation process, is to provide heat to a de-methanizer reboiler or a de-ethanizer reboiler. Such de-methanizer and/or de-ethanizer can be used to extract heavier hydrocarbons from the hydrocarbon feed stream prior to step (a), or used to fractionate C₂₋₄ containing natural gas liquids that have been extracted from the hydrocarbon feed stream into pure components.

More specifically, as shown in Figure 1, the partially saturated steam stream 13, optionally in the course of being routed back to CSP plant, may be routed to a further process heater 25 wherein it is further cooled down while giving off at least some of the residual heat is had it as process heat. Upstream of this heater 25, the partially saturated steam stream 13 may have a temperature of typically between 70 °C and 130 °C, downstream thereof it may have a temperature of anywhere between ambient temperature and 70 °C, preferably below 50 °C. The further process heater 25 is typically a low grade heat consuming heater, of which examples have been given above.

As disclosed above, the auxiliary process heater 26 and/or the further process heater 25 may be a heater in a thermally-driven chiller to add heat to a thermally-driven chilling process. Amongst various other chilling duties, the chilling duty generated by this chiller may be used to chill an air stream before feeding the air stream to a gas turbine. Likewise, it may be used to chill an air stream in an intercooler of a gas turbine. By chilling the air stream, the density of the air fed into the gas turbine compressor can be increased, which helps to relieve the duty of the air compressor in the gas turbine so that a decline in the output power of the gas turbine with increasing ambient air temperature can be countered. The gas turbine may be used for electric power generation, and/or to drive one or more compressors, for instance a refrigerant compressor in the liquefaction unit 120 if it is provided, or compressor 310 if it is provided, in which case the driver D1 may represent the gas turbine.

For completeness sake, it is remarked that as an alternative to parabolic trough concentrators, a linear Fresnel reflector array of concentrators can be used. This is a line focus system similar to parabolic trough systems in which solar radiation is concentrated on an elevated inverted linear receiver using an array of nearly flat reflectors. The receiver contains the first thermal transfer fluid stream 12 which is heated to provide the heated first thermal transfer fluid stream. The use of linear concentrators provides a lower-cost alternative to parabolic trough concentrators and provides a number of advantages over parabolic systems such as lower structural support and concentrator costs, fixed fluid joints, a receiver separated from the concentrators and long focal lengths allowing the use of conventional glass.

Central receiver (solar tower) CSP systems use a circular array of large individually tracking plain mirrors (heliostats) as the one or more concentrators to concentrate sunlight onto a central receiver mounted on top of a tower. The first thermal transfer fluid stream 12 is passed to the central receiver where it is heated to provide the heated first thermal transfer fluid stream 42. Such systems can provide high conversion efficiencies. If pressurised gas or air is used as the thermal transfer fluid, temperatures of about 1000 °C or more may be achieved. In a similar manner to the parabolic trough CSP systems, the solar thermal energy can be captured directly in the first thermal transfer fluid or used to heat a second or further thermal transfer fluid, which can be subsequently heat exchanged against the loaded sorbent to release the sorbate and regenerate the sorbent.

Parabolic dish CSP systems are smaller units which use dish shaped concentrators to reflect and concentrate sunlight into a receiver situated at the focal point of the dish. The concentrated radiation is absorbed into the receiver and can heat the first thermal transfer fluid to temperatures of about 750 °C.

A person skilled in the art will readily understand that the present invention may be modified in many ways without departing from the scope of the appended claims.

For instance, natural gas is mentioned above as one example of the hydrocarbon stream comprising one or more sorbate components. Other hydrocarbon streams comprising one or more sorbate components may be employed, such as gasses being formed during decomposition of waste, particularly organic waste.

For instance, liquefaction of the treated process stream is mentioned as one example of a further treatment of the treated process stream. However, other further treatments of the treated process stream are possible, such as compressing and/or sending to a gas network, and/or use as feed to a chemical conversion process of the hydrocarbons in the treated process stream, such as oxidation, partial oxidation, etc.. Venting into the atmosphere is, however, not considered to be a "further treatment" in a further treatment unit.

## Claims

1. Method for the removal of a sorbate component from a rich stream comprising one or more sorbate components, said method comprising at least the steps of:
(a) providing a rich stream comprising one or more sorbate components;
(b) treating the rich stream with a sorbent to capture one or more of the one or more sorbate components and to provide a lean stream that is diminished in sorbate component content and a loaded sorbent comprising the sorbent and one or more sorbate components;
(c) collecting solar energy from the sun in a concentrated solar power system to provide a pressurized steam stream with the captured solar thermal energy;
(d) converting the pressurized steam stream into electric power and an exhaust steam stream, the exhaust steam stream being at lower pressure than the pressurized steam stream; and
(e) regenerating the loaded sorbent to provide a sorbent component and one or more sorbate component streams wherein using heat from the exhaust steam stream to heat the loaded sorbent to provide the sorbent component and one or more sorbate component streams.

2. A method as claimed in Claim 1, wherein step (d) comprises passing the pressurized steam stream though a back pressure steam turbine and driving an electric generator with the back pressure steam turbine.

3. A method as claimed in any one of the preceding claims, wherein the one or more sorbate components captured in step (b) are an acid gas.

4. A method as claimed in any one of the preceding claims, wherein the one or more sorbate components comprises one or more of the group selected from: carbon dioxide, oxides of sulphur and hydrogen sulphide.

5. A method according to any one of the preceding claims, wherein the rich stream is a process stream, preferably provided in the form of hydrocarbon stream, preferably formed from a natural gas stream.

6. A method according to any one of the preceding claims, further comprising a step of passing the lean stream to one or more further treatment units.

7. A method according to any one of the preceding claims, wherein the lean stream is subsequently liquefied, preferably thereby providing liquefied natural gas.

8. A method according to Claim 7, wherein the electric power generated in step (d) is used to provide at least part of the energy necessary for the subsequent liquefying of the lean stream.

9. A method according to any one of the preceding claims, wherein a part of the exhaust steam stream that is not used to heat the loaded sorbent is used to provide heat to an auxiliary process, optionally selected from the group consisting of: a distillation process, a catalytic conversion process, a thermal desalination process, and a thermally-driven chilling process.

10. A method according to any one of the preceding claims, wherein during said regenerating of step (e) a partially saturated steam stream is formed from the exhaust steam stream, the method further comprising drawing heat from the partially saturated steam to provide further process heat.

11. An apparatus for removing a sorbate component from a rich stream comprising one or more sorbate components, said apparatus comprising at least:
- a process stream inlet line connected to a source of a rich stream comprising one or more sorbate components;
- a treating unit connected to the rich stream inlet line arranged to treat the process stream with a sorbent and to provide a lean stream and a loaded sorbent;
- a concentrated solar power system to capture solar thermal energy to provide a pressurized steam stream with the captured solar thermal energy;
- a power generator connected to the concentrated solar power system to receive the pressurized steam stream and to convert the pressurized steam stream into electric power and an exhaust steam stream; and
- a loaded sorbent regeneration apparatus connected to the power generator to receive the exhaust steam stream from the power generator, and to generate a sorbent component and an sorbate component stream from the loaded sorbent using heat from the exhaust steam stream.

12. An apparatus according to claim 10, wherein the power generator comprises a back pressure steam turbine driven by the pressurized steam stream, and driving an electric generator driven by the back pressure steam turbine.

13. An apparatus according to claim 10 or 11, further comprising a liquefaction unit electrically connected to the power generator and fluidly connected to the treating unit to receive the lean stream therefrom.

14. An apparatus according to any of claims 11 to 13, wherein the treating unit is connected to one or more further treating units for further treating of the lean stream.

15. An apparatus according to any of claims 11 to 14, further comprising a further process heater arranged downstream of the loaded sorbent regeneration apparatus, to consume residual heat still present in the steam stream after the loaded sorbent regeneration.
